# EUROPEAN PATENT APPLICATION

(11) **EP 4 712 549 A1**
(43) Date of publication of application: **18.03.2026**
(21) Application number: 23936134.8
(22) Date of filing: 11.05.2023
(51) Int. Cl.: H04W 28/04, H04W 4/70, H04L 1/1812

(54) **SIDELINK RADIO LINK FAILURE DETECTION METHOD AND APPARATUS**

(71) Applicant: Beijing Xiaomi Mobile Software Co., Ltd., Beijing 100085 (CN)
(72) Inventor: XIONG, Yi, Beijing 100085 (CN)
(74) Representative: Stöckeler, Ferdinand
(86) International application number: PCT/CN2023/093603
(87) International publication number: WO 2024/229819

(57) **Abstract**

Disclosed in the embodiments of the present disclosure are a sidelink (SL) radio link failure (RLF) detection method and apparatus, which can be applied to systems such as the Internet of Vehicles, V2X and V2V. The method comprises: a terminal device determining a receiving situation of hybrid automatic repeat request (HARQ) feedback on a physical sidelink feedback channel (PSFCH); and according to the receiving situation of the HARQ feedback on the PSFCH, determining whether a unicast connection triggers an SL RLF, wherein the unicast connection is a unicast connection established by a sending terminal and a receiving terminal on an SL, the sending terminal and the receiving terminal perform SL communication by means of a plurality of carriers, which are associated with the unicast connection. By means of implementing the embodiments of the present disclosure, the problem of how to effectively detect an RLF in an SL carrier aggregation scenario can be solved, such that an RLF mechanism can be supported in a carrier aggregation scenario during SL communication.

## Description

### TECHNICAL FIELD

The present disclosure relates to the field of communication technology, and in particular to a method and an apparatus for detecting sidelink radio link failure.

### BACKGROUND

**In** order to support direct communication between terminals, a mode of direct communication (also called sidelink, SL) is introduced, and an interface between the terminals is PC-5. Based on the correspondence between the sending and receiving terminals, three transmission modes are supported on the SL, such as unicast, multicast, and broadcast.

For the SL in version R18, carrier aggregation technology is supported. That is, SL carrier aggregation may be used to achieve terminal-to-terminal communication. This scenario may be called an SL carrier aggregation scenario.

However, there is currently a lack of effective means for detecting radio link failure on an SL carrier aggregation scenarios.

### SUMMARY

Embodiments of the present disclosure provide a method and an apparatus for detecting sidelink (SL) radio link failure (RLF), which may be applied to Internet of Vehicles, such as vehicle to everything (V2X) communication, long-term evolution-vehicle (LTE-V) communication, vehicle to vehicle (V2V) communication, etc., or may be used in the fields of intelligent driving, intelligent connected vehicles, etc. The disclosure may solve the problem of how to effectively detect the RLF in an SL carrier aggregation scenario, so that the RLF mechanism may be supported in the carrier aggregation scenario of the SL communication.

In a first aspect, an embodiment of the present disclosure provides a method for detecting SL RLF. The method is performed by a transmitting terminal, and the method includes: determining reception of hybrid automatic repeat request (HARQ) feedback on a physical sidelink feedback channel (PSFCH); and determining whether to trigger the SL RLF for a unicast connection based on the reception of HARQ feedback on the PSFCH; in which the unicast connection is a unicast connection established between the transmitting terminal and a receiving terminal on an SL, the transmitting terminal and the receiving terminal perform SL communication via a plurality of carriers, and the plurality of carriers are associated with the unicast connection.

In this technical solution, the problem of how to effectively detect the SL RLF carrier aggregation scenario may be solved, so that the RLF mechanism may be supported in the carrier aggregation scenario of the SL communication.

In a second aspect, an embodiment of the present disclosure provides another method for detecting SL RLF, performed by a network device. The method includes: sending first configuration information to a transmitting terminal, in which the first configuration information includes a first threshold associated with a first variable, the transmitting terminal maintains one first variable for each unicast connection, the unicast connection is a unicast connection established between the transmitting terminal and a receiving terminal on an SL, the transmitting terminal and the receiving terminal perform SL communication via a plurality of carriers, the first variable is configured to count a number of consecutive discontinuous transmissions (DTXs) of the unicast connection on the plurality of carriers, and the plurality of carriers are associated with the unicast connection; and the first variable is used by the transmitting terminal to determine whether to trigger the SL RLF for the unicast connection.

In this technical solution, the transmitting terminal maintains the first variable for each unicast connection, and the first variable is configured to count the number of consecutive DTXs of the unicast connection on the plurality of carriers. The first threshold of the first variable is configured by the network device for the transmitting terminal, so that the transmitting terminal may determine whether to trigger the SL RLF for the unicast connection based on the first threshold. This may solve the problem of how to effectively detect the SL RLF carrier aggregation scenario, so that the RLF mechanism may be supported in the carrier aggregation scenario of the SL communication.

In a third aspect, an embodiment of the present disclosure provides another method for detecting SL RLF, performed by a network device. The method includes: sending second configuration information to a transmitting terminal, in which the transmitting terminal and a receiving terminal establish a unicast connection on an SL, the transmitting terminal and the receiving terminal perform SL communication via a plurality of carriers, and the plurality of carriers are associated with the unicast connection; the second configuration information includes a second threshold associated with a second variable, the transmitting terminal maintains one second variable for each carrier independently, the second variable is configured to count a number of consecutive DTXs of the unicast connection on a carrier corresponding to the second variable; and the second variable is used by the transmitting terminal to determine whether to trigger the SL RLF for the unicast connection.

In this technical solution, the transmitting terminal maintains one second variable for each carrier independently, and the second variable is configured to count the number of consecutive DTXs of the unicast connection on the carrier corresponding to the second variable. The second threshold of the second variable is configured by the network device for the transmitting terminal, so that the transmitting terminal may determine whether to trigger the SL RLF for the unicast connection based on the second threshold. This may solve the problem of how to effectively detect the SL RLF carrier aggregation scenario, so that the RLF mechanism may be supported in the carrier aggregation scenario of the SL communication.

In a fourth aspect, an embodiment of the present disclosure provides an apparatus for detecting SL RLF. The apparatus has functions of implementing some or all of the functions of the transmitting terminal in the method described in the above first aspect. For example, the functions of the apparatus may have the functions of some or all of the embodiments in the present disclosure, or may have the functions of implementing any one of the embodiments in the present disclosure alone. The functions may be implemented by hardware, or by hardware executing corresponding software. The hardware or software includes one or more units or modules corresponding to the above functions.

In an implementation, the structure of the apparatus may include a transceiver module and a processing module, and the processing module is configured to support the apparatus to perform corresponding functions in the above methods. The transceiver module is configured to support communication between the apparatus and other devices. The apparatus may further include a storage module, which is coupled to the transceiver module and the processing module and stores computer programs and data necessary for the apparatus.

In an implementation, the processing module is configured to determine reception of HARQ feedback on a PSFCH; determine whether to trigger the SL RLF for a unicast connection based on the reception of HARQ feedback on the PSFCH; in which the unicast connection is a unicast connection established between the apparatus and a receiving terminal on an SL, the apparatus and the receiving terminal perform SL communication via a plurality of carriers, and the plurality of carriers are associated with the unicast connection.

As an example, the processing module may be a processor, the transceiver module may be a transceiver or a communication interface, and the storage module may be a memory.

In a fifth aspect, an embodiment of the present disclosure provides another apparatus for detecting SL RLF. The apparatus has functions of implementing some or all of the functions of the network device in the method described in the above second aspect. For example, the functions of the apparatus may have the functions of some or all of the embodiments in the present disclosure, or may have the functions of implementing any one of the embodiments in the present disclosure alone. The functions may be implemented by hardware, or by hardware executing corresponding software. The hardware or software includes one or more units or modules corresponding to the above functions.

In an implementation, the structure of the apparatus may include a transceiver module and a processing module, and the processing module is configured to support the apparatus to perform corresponding functions in the above methods. The transceiver module is configured to support communication between the apparatus and other devices. The apparatus may further include a storage module, which is coupled to the transceiver module and the processing module and stores computer programs and data necessary for the apparatus.

In an implementation, the transceiver module is configured to send first configuration information to a transmitting terminal, in which the first configuration information includes a first threshold associated with a first variable, the transmitting terminal maintains one first variable for each unicast connection, the unicast connection is a unicast connection established between the transmitting terminal and a receiving terminal on an SL, the transmitting terminal and the receiving terminal perform SL communication via a plurality of carriers, the plurality of carriers are associated with the unicast connection, the first variable is configured to count a number of consecutive DTXs of the unicast connection on the plurality of carriers; and the first variable is used by the transmitting terminal to determine whether to trigger the SL RLF for the unicast connection.

In a sixth aspect, an embodiment of the present disclosure provides another apparatus for detecting SL RLF. The apparatus has functions of implementing some or all of the functions of the network device in the method described in the above third aspect. For example, the functions of the apparatus may have the functions of some or all of the embodiments in the present disclosure, or may have the functions of implementing any one of the embodiments in the present disclosure alone. The functions may be implemented by hardware, or by hardware executing corresponding software. The hardware or software includes one or more units or modules corresponding to the above functions.

In an implementation, the structure of the apparatus may include a transceiver module and a processing module, and the processing module is configured to support the apparatus to perform corresponding functions in the above methods. The transceiver module is configured to support communication between the apparatus and other devices. The apparatus may further include a storage module, which is coupled to the transceiver module and the processing module and stores computer programs and data necessary for the apparatus.

In an implementation, the transceiver module is configured to send second configuration information to a transmitting terminal, in which the transmitting terminal and a receiving terminal establish a unicast connection on an SL, the transmitting terminal and the receiving terminal perform SL communication via a plurality of carriers, and the plurality of carriers are associated with the unicast connection; the second configuration information includes a second threshold associated with a second variable, the transmitting terminal maintains one second variable for each carrier independently, the second configuration information comprises a second threshold associated with a second variable, the transmitting terminal maintains one second variable for each carrier independently, the second variable is configured to count a number of consecutive DTXs of the unicast connection on a carrier corresponding to the second variable, and the second variable is used by the transmitting terminal to determine whether to trigger the SL RLF for the unicast connection.

In a seventh aspect, an embodiment of the present disclosure provides a communication device, which includes a processor. When the processor calls a computer program in a memory, the method described in the above first aspect is executed.

In an eighth aspect, an embodiment of the present disclosure provides a communication device, which includes a processor. When the processor calls a computer program in a memory, the method described in the above second aspect is executed.

In a ninth aspect, an embodiment of the present disclosure provides a communication device, which includes a processor. When the processor calls a computer program in a memory, the method described in the above third aspect is executed.

In a tenth aspect, an embodiment of the present disclosure provides a communication device, which includes a processor and a memory storing a computer program. When the computer program is executed by the processor, the communication device is caused to perform the method described in the above first aspect.

In an eleventh aspect, an embodiment of the present disclosure provides a communication device, which includes a processor and a memory storing a computer program. When the computer program is executed by the processor, the communication device is caused to perform the method described in the above second aspect.

In a twelfth aspect, an embodiment of the present disclosure provides a communication device, which includes a processor and a memory storing a computer program. When the computer program is executed by the processor, the communication device is caused to perform the method described in the above third aspect.

In a thirteenth aspect, an embodiment of the present disclosure provides a communication device, which includes a processor and an interface circuit. The interface circuit is configured to receive code instructions and transmit the code instructions to the processor. The processor is configured to execute the code instructions, the communication device is caused to perform the method described in the above first aspect.

In a fourteenth aspect, an embodiment of the present disclosure provides a communication device, which includes a processor and an interface circuit. The interface circuit is configured to receive code instructions and transmit the code instructions to the processor. The processor is configured to execute the code instructions, the communication device is caused to perform the method described in the above second aspect.

In a fifteenth aspect, an embodiment of the present disclosure provides a communication device, which includes a processor and an interface circuit. The interface circuit is configured to receive code instructions and transmit the code instructions to the processor. The processor is configured to execute the code instructions, the communication device is caused to perform the method described in the above first aspect.

In a sixteenth aspect, an embodiment of the present disclosure provides a system for detecting SL RLF. The system includes the apparatus for detecting RLF described in the above fourth aspect and the apparatus for detecting RLF described in the above fifth aspect. Or the system includes the apparatus for detecting RLF described in the above fourth aspect and the apparatus for detecting RLF described in the above sixth aspect. Or the system includes the communication device described in the above seventh aspect and the communication device described in the above eighth aspect. Or the system includes the communication device described in the above seventh aspect and the communication device described in the above ninth aspect. Or the system includes the communication device described in the above tenth aspect and the communication device described in the above eleventh aspect. Or the system includes the communication device described in the above tenth aspect and the communication device described in the above twelfth aspect. Or the system includes the communication device described in the above thirteenth aspect and the communication device described in the above fourteenth aspect. Or the system includes the communication device described in the above thirteenth aspect and the communication device described in the above fifteenth aspect.

In a seventeenth aspect, an embodiment of the present disclosure provides a computer-readable storage medium for storing instructions used by the above transmitting terminal which, when executed, enable the transmitting terminal to perform the method described in the above first aspect.

In an eighteenth aspect, an embodiment of the present disclosure provides a readable storage medium for storing instructions used by the above network device which, when executed, enable the network device to perform the method described in the above second aspect.

In a nineteenth aspect, an embodiment of the present disclosure provides a readable storage medium for storing instructions used by the above network device which, when executed, enable the network device to perform the method described in the above third aspect.

In a twentieth aspect, the present disclosure further provides a computer program product including a computer program which, when running on a computer, enables the computer to perform the method described in the above first aspect.

In a twenty-first aspect, the present disclosure further provides a computer program product including a computer program which, when running on a computer, enables the computer to perform the method described in the above second aspect.

In a twenty-second aspect, the present disclosure further provides a computer program product including a computer program which, when running on a computer, enables the computer to perform the method described in the above third aspect.

In a twenty-third aspect, the present disclosure provides a chip system including at least one processor and an interface for supporting the transmitting terminal to implement the functions involved in the above first aspect, for example, determining or processing at least one of data or information involved in the above method. In a possible design, the chip system also includes a memory, which is used to store computer programs and data necessary for the transmitting terminal. The chip system may be composed of chips, or may include chips and other discrete devices.

In a twenty-fourth aspect, the present disclosure provides a chip system including at least one processor and an interface for supporting the network device to implement the functions involved in the above second aspect, for example, determining or processing at least one of data or information involved in the above method. In a possible design, the chip system also includes a memory, which is used to store computer programs and data necessary for the network device. The chip system may be composed of chips, or may include chips and other discrete devices.

In a twenty-fifth aspect, the present disclosure provides a chip system including at least one processor and an interface for supporting the network device to implement the functions involved in the above third aspect, for example, determining or processing at least one of data or information involved in the above method. In a possible design, the chip system also includes a memory, which is used to store computer programs and data necessary for the network device. The chip system may be composed of chips, or may include chips and other discrete devices.

In a twenty-sixth aspect, the present disclosure provides a computer program, which, when running on a computer, enables the computer to perform the method described in the above first aspect.

In a twenty-seventh aspect, the present disclosure provides a computer program, which, when running on a computer, enables the computer to perform the method described in the above second aspect.

In a twenty-eighth aspect, the present disclosure provides a computer program, which, when running on a computer, enables the computer to perform the method described in the above third aspect.

In a twenty-ninth aspect, the present disclosure provides a communication system, including: a terminal configured to perform the method described in the above first aspect; and a network device configured to perform the method described in the above second or third aspect.

### BRIEF DESCRIPTION OF THE DRAWINGS

In order to more clearly explain the technical solutions in the embodiments of the disclosure or the background, accompanying drawings needed to be used in the embodiments of the disclosure or the background are described below.
FIG. 1 is a diagram of an architecture of a communication system according to an embodiment of the disclosure.
FIG. 2 is a flowchart of a method for detecting SL RLF according to an embodiment of the present disclosure.
FIG. 3 a flowchart of another method for detecting SL RLF according to an embodiment of the disclosure.
FIG. 4 is a flowchart of another method for detecting SL RLF according to an embodiment of the disclosure.
FIG. 5 is a flowchart of another method for detecting SL RLF according to an embodiment of the disclosure.
FIG. 6 is a flowchart of another method for detecting SL RLF according to an embodiment of the disclosure.
FIG. 7 is a structural diagram of a communication apparatus according to an embodiment of the present disclosure.
FIG. 8 is a structural diagram of a communication device according to an embodiment of the present disclosure.
FIG. 9 is a structural diagram of a chip according to an embodiment of the present disclosure.

### DETAILED DESCRIPTION

Embodiments of the present disclosure are described in detail below, examples of which are shown in the accompanying drawings, throughout which the same or similar reference numerals represent the same or similar elements or elements having the same or similar functions. The embodiments described below with reference to the accompanying drawings are exemplary and are intended to explain the present disclosure but should not be construed as limiting the present disclosure. In the description of the present disclosure, unless otherwise specified, "/" means "or". For example, A/B may mean A or B. The term "and/or" in the present disclosure is only a way to describe an association relationship of associated objects, indicating that there may be three relationships. For example, A and/or B may mean: A exists alone, A and B exist at the same time, and B exists alone.

The terms used in the embodiments of the present disclosure are only for the purpose of describing specific embodiments and are not intended to limit the embodiments of the present disclosure. As used in the present disclosure and the appended claims, the singular forms "a/an" and "the" are intended to include the plural forms as well, unless the context clearly indicates otherwise.

It should be understood that although the terms first, second, third, etc. may be used to describe various information in the embodiments of the present disclosure, the information should not be limited to these terms. These terms are used only to distinguish information of identical type from one another. For example, without departing from the scope of the embodiments of the present disclosure, first information may also be referred to as second information, and similarly, second information may also be referred to as first information. Depending on the context, the words "if" and "in case of/that" as used herein may be interpreted as "when" or "while" or "in response to a determination."

Embodiments of the present disclosure are described in detail below, examples of which are illustrated in the accompanying drawings, throughout the same or similar reference numerals refer to the same or similar elements. The embodiments described below with reference to the accompanying drawings are exemplary and are intended to explain the present disclosure but should not be construed as limiting the present disclosure.

To facilitate understanding, the terms involved in this disclosure are first introduced.

### 1. Sidelink (SL)

A link for direct communication between terminals.

### 2. Vehicle-to-everything (V2X) communication

The V2X communication is communication between a vehicle and anything in the outside world. The V2X communication may include, but is not limited to, vehicle-to-vehicle (V2V) communication, vehicle-to-pedestrian (V2P) communication, vehicle-to-infrastructure (V2I) communication, and vehicle-to-network (V2N) communication.

It needs to be noted that, in order to support direct communication between terminals, a communication mode of direct communication (also called a sidelink, SL) is introduced, and an interface between the terminals is PC-5. Based on a correspondence between the transmitting terminal and the receiving terminal, three transmission modes are supported on the SL, such as unicast, multicast and broadcast. The transmitting terminal sends sidelink control information (SCI) on a physical sidelink control channel (PSCCH) and second-stage SCI on a physical sidelink shared channel (PSSCH), which carries a resource location of transmitted data, a source identifier (ID) and a destination ID, etc. For data packets with Hybrid Automatic Repeat reQuest (HARQ) feedback enabled, the receiving terminal performs hybrid automatic retransmission request acknowledgement (HARQ-ACK) feedback on a physical sidelink feedback channel (PSFCH).

There are two ways to allocate transmission resources in SL communication, one of which is a network dynamic scheduling mode (a first allocation mode, also called mode 1), the other of which is an autonomous selection mode (a second allocation mode, also called mode 2) of a terminal from a network configured or pre-configured resource pool. The dynamic scheduling means that the network dynamically allocates transmission resources on the SL to the terminal based on a data report cached by the terminal, while the autonomous selection means that the terminal randomly selects transmission resources from the network configured or pre-configured resource pool. The network device may configure a plurality of resource pools for the terminal on one bandwidth part (BWP). The specific allocation mode to be used is configured by the network device through a radio resource control (RRC) signaling.

The detection mechanism of sidelink radio link failure (SL RLF) based on HARQ feedback is introduced in the version R16. For a unicast connection, if the terminal does not receive HARQ feedback on PSFCH resources for a certain number of consecutive times, it is considered that consecutive Discontinuous Transmission (DTX) has occurred. The terminal determines/ considers that the unicast connection has experienced the SL RLF based on HARQ feedback and notifies it to an RRC layer. The SL RLF detection based on HARQ feedback is controlled by the RRC layer by configuring a maximum number of consecutive DTXs (sl-maxNumConsecutiveDTX) per UE.

For the SL in version R18, carrier aggregation technology is supported. That is, SL carrier aggregation may be used to achieve terminal-to-terminal communication. This scenario may be called an SL carrier aggregation scenario.

However, there is currently a lack of effective means for detecting radio link failure on an SL carrier aggregation scenarios.

To this end, the present disclosure proposes a method and an apparatus for detecting SL RLF, which may solve the problem of how to effectively detect the RLF in the SL carrier aggregation scenario, so that the RLF mechanism may be supported in the carrier aggregation scenario of the SL communication.

In order to better understand the method for detecting SL RLF in embodiments of the present disclosure, the communication system to which the embodiments of the present disclosure are applicable is first described below.

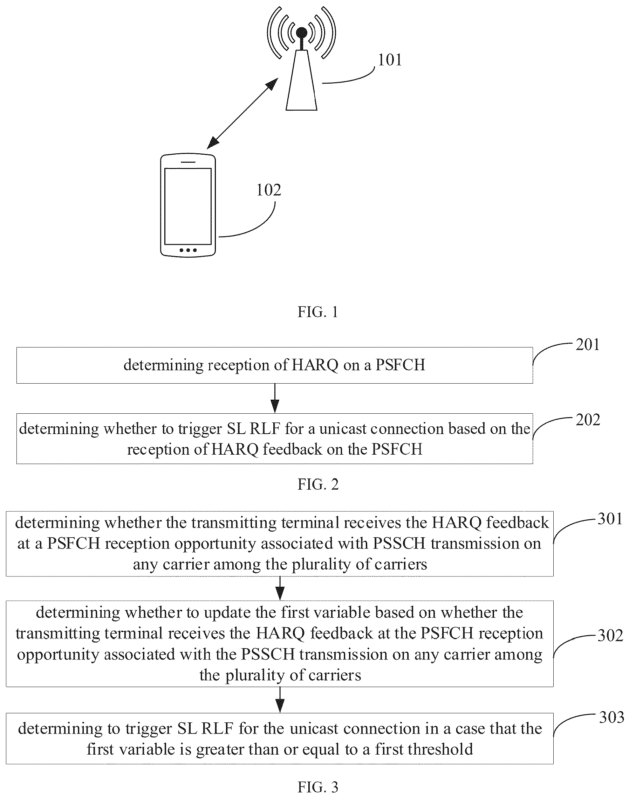

With reference to FIG. 1, it is a diagram of an architecture of a communication system according to an embodiment of the present disclosure. The communication system may include but is not limited to a network device and a terminal. The number and form of the devices shown in FIG. 1 are for example only, which do not constitute a limitation on the embodiments of the present disclosure. In actual applications, two or more network devices and two or more terminals may be included. The communication system shown in FIG. 1 includes one network device 101 and two terminals 102 as an example.

It needs to be noted that the technical solutions of the embodiments of the present disclosure may be applied to various communication systems, for example, a long term evolution (LTE) system, a fifth generation (5G) mobile communication system, a 5G NR system, or other future new mobile communication systems. It needs to also be noted that the sidelink in the embodiments of the present disclosure may also be called a side link or a direct link.

The network device 101 in the embodiments of the present disclosure is an entity on the network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system, etc. The specific technology and specific device form adopted by the network device are not limited in the embodiments of the present disclosure. The network device provided by the embodiments of the present disclosure may be composed of a central unit (CU) and a distributed unit (DU). The CU may also be called a control unit. The CU-DU structure may be used to split a protocol layer of the network device such as a base station, so that some functions of the protocol layer is centrally controlled by the CU, and the remaining part or all of the functions of the protocol layer is distributed in the DU, which is centrally controlled by the CU.

The terminal 102 in the embodiments of the present disclosure is an entity on a user side for receiving or transmitting signals, such as a mobile phone. The terminal may also be referred to as a user equipment (UE), a mobile station (MS), a mobile terminal (MT), etc. The terminal may be a vehicle with a communication capability, a smart car, a mobile phone, a wearable device, a tablet computer, a computer with a wireless transceiver capability, a virtual reality (VR) terminal, an augmented reality (AR) terminal, a wireless terminal in industrial control, a wireless terminal in self-driving, a wireless terminal in remote medical surgery, a wireless terminal in smart grids, a wireless terminal in transportation safety, a wireless terminal in a smart city, a wireless terminal in a smart home, or the like. The specific technology and specific device form adopted by the terminal are not limited in the embodiments of the present disclosure. The transmitting terminal mentioned in the embodiments of the present disclosure may be the terminal 102.

It may be understood that the communication system described in the embodiments of the present disclosure is for the purpose of more clearly illustrating the technical solution of the embodiments of the present disclosure, and does not constitute a limitation on the technical solution provided by the embodiments of the present disclosure. Those skilled in the art may know that with the evolution of the system architecture and the emergence of new service scenarios, the technical solution provided by the embodiments of the present disclosure is also applicable to similar technical problems.

The method and apparatus for detecting SL RLF according to the present disclosure are described in detail below with reference to the accompanying drawings.

Referring to FIG. 2, it is a flowchart of a method for detecting SL RLF according to an embodiment of the present disclosure. It needs to be noted that the method is performed by a transmitting terminal. As shown in FIG. 2, the method may include but is not limited to the following steps 201-202.

At 201, reception of HARQ feedback on a PSFCH is determined.

In embodiments of the present disclosure, the transmitting terminal may transmit SCI on the PSCCH and transmit second-stage SCI on the PSSCH. The second-stage SCI carries a resource location of transmitted data, a source ID and a destination ID, etc. For data packets with HARQ feedback enabled, the receiving terminal performs HARQ-ACK feedback on the PSFCH. In this way, the transmitting terminal may determine a reception situation of HARQ feedback on the PSFCH, so as to detect whether the SL RLF has occurred in the unicast connection between the transmitting terminal and the receiving terminal based on the reception situation of HARQ feedback on the PSFCH. That is, the transmitting terminal may determine whether the unicast connection between the transmitting terminal and the receiving terminal has triggered the SL RLF based on the reception situation of HARQ feedback from the receiving terminal on the PSFCH.

At 202, it is determined whether to trigger the SL RLF for the unicast connection based on the reception of HARQ feedback on the PSFCH.

In embodiments of the present disclosure, the unicast connection is a unicast connection established between a transmitting terminal and a receiving terminal on an SL, and the transmitting terminal and the receiving terminal perform SL communication via a plurality of carriers, and the plurality of carriers are associated with the unicast connection.

In embodiments of the present disclosure, the transmitting terminal may determine whether to trigger the SL RLF for the unicast connection between the transmitting terminal and the receiving terminal based on the reception of HARQ feedback on the PSFCH. That is to say, the transmitting terminal may detect, based on the reception of the HARQ feedback on the PSFCH, whether the SL RLF based on HARQ feedback has occurred in the unicast connection between the transmitting terminal and the receiving terminal. If it is detected that the SL RLF based on HARQ feedback has occurred in the unicast connection, it may be determined that the unicast connection has triggered the SL RLF. If the SL RLF based on HARQ feedback is not detected in the unicast connection, it may be determined that the unicast connection does not trigger the SL RLF.

Optionally, in an implementation, if the transmitting terminal does not receive the HARQ feedback on the PSFCH resources for a certain number of consecutive (DRX) times, it is determined that the unicast connection between the transmitting terminal and the receiving terminal has triggered the SL RLF. Alternatively, if a number of times that the transmitting terminal fails to consecutively receive HARQ feedback on the PSFCH resources is less than a certain number, it is determined that the unicast connection between the transmitting terminal and the receiving terminal does not trigger the SL RLF.

In a possible implementation, the transmitting terminal determines to trigger the SL RLF for the unicast connection between the transmitting terminal and the receiving terminal, and a media access control (MAC) layer of the transmitting terminal may notify (send) the RRC layer of the transmitting terminal that the unicast connection has triggered the SL RLF. The RRC layer releases the unicast connection so that the transmitting terminal and the receiving terminal may re-establish the unicast connection to ensure normal communication.

By implementing the embodiments of the present disclosure, the problem of how to effectively detect the RLF in the SL carrier aggregation scenario may be solved, so that the RLF mechanism may be supported in the carrier aggregation scenario of the SL communication.

It needs to be noted that, in some embodiments of the present disclosure, the transmitting terminal may maintain a first variable for each unicast connection, in which the first variable is configured to count a number of consecutive discontinuous transmissions (DTXs) of the unicast connection on the plurality of carriers. The transmitting terminal maintaining the first variable may be understood as the transmitting terminal managing the first variable. For example, the transmitting terminal may initialize the first variable to 0, or reset it to 0, or add 1. That is to say, for one unicast connection, the transmitting terminal may count the number of consecutive DTXs of the unicast connection on the plurality of carriers through the first variable associated with this unicast connection, so as to determine whether to trigger the SL RLF for the unicast connection based on the number of consecutive DTXs counted by the first variable. Specifically, referring to FIG. 3, which is a flowchart of another method for detecting SL RLF according to an embodiment of the present disclosure. It needs to be noted that the method is performed by the transmitting terminal. As shown in FIG. 3, the method may include but is not limited to the following steps at 301-303.

At 301, it is determined whether a transmitting terminal receives HARQ feedback at a PSFCH reception opportunity associated with PSSCH transmission on any carrier among the plurality of carriers associated with a unicast connection.

It needs to be noted that the PSSCH mentioned in the present disclosure refers to a PSSCH associated with the unicast connection, and this explanation is applicable to any embodiment of the present disclosure.

In embodiments of the present disclosure, the unicast connection is a unicast connection between the transmitting terminal and the receiving terminal, and the unicast connection is associated with a plurality of carriers. That is, the unicast connection between the transmitting terminal and the receiving terminal supports the plurality of carriers. As such, the transmitting terminal and the receiving terminal are configured with a carrier aggregation, and the transmitting terminal and the receiving terminal perform SL communication via a plurality of carriers. It needs to be noted that, in this embodiment, the transmitting terminal may maintain one first variable for the unicast connection independently, and the first variable is configured to count a number of consecutive DTXs of the unicast connection on the plurality of carriers. In this way, for the unicast connection, the transmitting terminal may determine whether the transmitting terminal receives HARQ feedback at a PSFCH reception opportunity associated with PSSCH transmission on any carrier, so as to determine whether to trigger the SL RLF for the unicast connection based on whether the transmitting terminal receives the HARQ feedback at the PSFCH reception opportunity associated with the PSSCH transmission on any carrier and the first variable.

At 302, it is determined whether to update the first variable according to whether the transmitting terminal receives HARQ feedback at the PSFCH reception opportunity associated with the PSSCH transmission on any carrier among plurality of carriers associated with the unicast connection.

In an embodiment of the present disclosure, for the unicast connection, the transmitting terminal may determine whether to update the first variable based on whether the transmitting terminal receives the HARQ feedback at the PSFCH reception opportunity associated with the PSSCH transmission on any carrier among the plurality of carriers associated with the unicast connection.

In a possible implementation, for the unicast connection, whenever the transmitting terminal does not receive the HARQ feedback at the PSFCH reception opportunity associated with the PSSCH transmission on any carrier associated with the unicast connection, the first variable is determined to be incremented by 1. That is, if the transmitting terminal determines that no HARQ feedback is received at the PSFCH reception opportunity associated with the PSSCH transmission on a carrier associated with a certain unicast connection, the first variable is updated, for example, the value of the first variable is incremented by 1. When the transmitting terminal determines that no HARQ feedback is received at the PSFCH reception opportunity associated with the PSSCH transmission on another carrier associated with the certain unicast connection, the first variable is updated again, and so on.

Optionally, in an implementation, since each carrier corresponds to a different HARQ entity, a number of DTXs on each carrier may be counted respectively by the different HARQ entities corresponding to each carrier. Optionally, in an implementation, an MAC entity of the transmitting terminal may count the number of DTXs on each carrier.

As an example, for the unicast connection, the transmitting terminal counts whether the DTX occurs at each PSFCH reception opportunity associated with each PSSCH transmission on all carriers associated with the unicast connection. If no HARQ feedback is detected at the PSFCH reception opportunity, it is determined that the DTX occurs at the PSFCH reception opportunity, and the transmitting terminal updates the first variable corresponding to the unicast connection, for example, adding 1 to the first variable corresponding to the unicast connection. Optionally, for the unicast connection, if the HARQ feedback is detected at the PSFCH reception opportunity associated with PSSCH transmission on any carrier associated with the unicast connection, the transmitting terminal determines that the first variable is reset to 0. In an implementation, for the unicast connection, if the transmitting terminal detects the HARQ feedback on the PSFCH reception opportunity associated with any PSSCH transmission on any carrier associated with the unicast connection, the transmitting terminal may reset the first variable to 0.

For example, taking the unicast connection associated with carrier 1 and carrier 2 as an example, for this unicast connection, if the transmitting terminal does not detect the HARQ feedback at the PSFCH reception opportunity associated with the PSSCH sent on the carrier 1, the transmitting terminal may add 1 to the first variable; if the transmitting terminal does not detect the HARQ feedback at the PSFCH reception opportunity associated with the PSSCH sent on the carrier 2, the transmitting terminal may add 1 to the first variable again. If the transmitting terminal does not detect the HARQ feedback at the PSFCH reception opportunity associated with the PSSCH sent on the carrier 1, the transmitting terminal increments the first variable by 1; if the transmitting terminal detects the HARQ feedback at the PSFCH reception opportunity associated with the PSSCH sent on the carrier 2, the transmitting terminal resets the first variable to 0.

As another example, for the unicast connection, if the transmitting terminal does not detect the HARQ feedback at the first PSFCH receiving opportunity (for example, the PSFCH receiving opportunity associated with the PSSCH sent on the carrier 1), the transmitting terminal increments the first variable by 1, and if the transmitting terminal does not detect the HARQ feedback at the second PSFCH receiving opportunity (for example, the PSFCH receiving opportunity associated with the PSSCH sent on the carrier 2), the transmitting terminal increments the first variable by 1 again, in which the second PSFCH receiving opportunity is the next PSFCH receiving opportunity of the first PSFCH receiving opportunity. The second PSFCH receiving opportunity and the first PSFCH receiving opportunity may belong to the same carrier, or may belong to different carriers. Optionally, if the transmitting terminal does not detect the HARQ feedback at the first PSFCH reception opportunity, the transmitting terminal increments the first variable by 1; and if the transmitting terminal detects the HARQ feedback at the second PSFCH reception opportunity, the transmitting terminal resets the first variable to 0.

It needs to be noted that, in the embodiments of the present disclosure, when the unicast connection is established, the transmitting terminal initializes the first variable corresponding to the unicast connection to 0. Alternatively, the transmitting terminal initializes the first variable corresponding to the unicast connection to 0 when the first threshold associated with the first variable is reconfigured. Alternatively, the transmitting terminal initializes the first variable corresponding to the unicast connection to 0 when the first threshold associated with the first variable is initially configured, in which the initial configuration may be understood that the network device configures the first threshold for the transmitting terminal for the first time.

At 303, in a case that the first variable is greater than or equal to a first threshold, it is determined to trigger the SL RLF for the unicast connection.

In the embodiments of the present disclosure, in the case that the first variable associated with the unicast connection is greater than or equal to the first threshold, the transmitting terminal believes that the SL RLF based on HARQ feedback occurs for the unicast connection, and the MAC layer of the transmitting terminal may notify (send) the RRC layer of the transmitting terminal that sending the unicast connection has triggered the SL RLF. The RRC layer releases the unicast connection so that the transmitting terminal and the receiving terminal may re-establish the unicast connection to ensure normal communication.

That is to say, when the transmitting terminal detects that no HARQ feedback is received at the PSFCH receiving opportunity, it is counted that the DTX has occurred for one time. In embodiments of the present disclosure, the first variable may be configured to count a number of consecutive DTXs on all carriers associated with the unicast connection. When the transmitting terminal receives the HARQ feedback on any carrier among all carriers associated with the unicast connection, the transmitting terminal resets the first variable to 0; if the transmitting terminal does not receive the HARQ feedback at the PSFCH receiving opportunity associated with the PSSCH transmission on any carrier among all carriers associated with the unicast connection, the first variable is determined to be incremented by 1. When a number of times that no HARQ feedback is received consecutively on all carriers associated with the unicast connection is greater than or equal to the first threshold, i.e., the first variable is greater than or equal to the first threshold, it may be determined that the unicast connection has triggered the SL RLF.

It needs to be noted that "whether the HARQ feedback is received" mentioned in this disclosure is detected according to the PSFCH opportunity. That is, if there is a PSFCH on a carrier that needs to be received, it is detected whether HARQ feedback is received at the reception opportunity of the PSFCH on the carrier. The PSFCHs on different carriers may be interleaved, depending on which carrier the scheduled PSSCH is. For example, if the scheduled PSSCH is on the carrier 1, it is detected whether the HARQ feedback is received at the PSFCH reception opportunity associated with the PSSCH on the carrier 1. If the HARQ feedback is not received at the PSFCH reception opportunity associated with the PSSCH on the carrier 1, the first variable is incremented by 1.

Optionally, in some embodiments of the present disclosure, the transmitting terminal may obtain the first threshold via first configuration information; the first threshold is configured according to terminal granularity (i.e., per UE). As an example, the first configuration information may be configuration information sent by the network device to the transmitting terminal, or may be pre-configuration information. That is, the transmitting terminal may obtain the first threshold from the configuration or pre-configuration of the network device.

For example, a transmitting terminal in an RRC connected state may obtain the first threshold via a dedicated signaling, a transmitting terminal in an RRC IDLE/INACTIVE state may obtain the first threshold via a system information block (SIB), and a transmitting terminal in out of coverage (OOC) may obtain the first threshold via pre-configuration.

In the embodiments of the present disclosure, the SL communication is performed between the transmitting terminal and the receiving terminal via the plurality of carriers, and the transmitting terminal may maintain the same DTX detection variable (i.e., the above-mentioned first variable) on all carriers for each unicast connection. In this way, when the first variable reaches the first threshold, it is determined that the unicast connection has triggered the SL RLF, which solves the problem of how to effectively detect the RLF in the SL carrier aggregation scenario, so that the RLF mechanism may be supported in the carrier aggregation scenario of the SL communication.

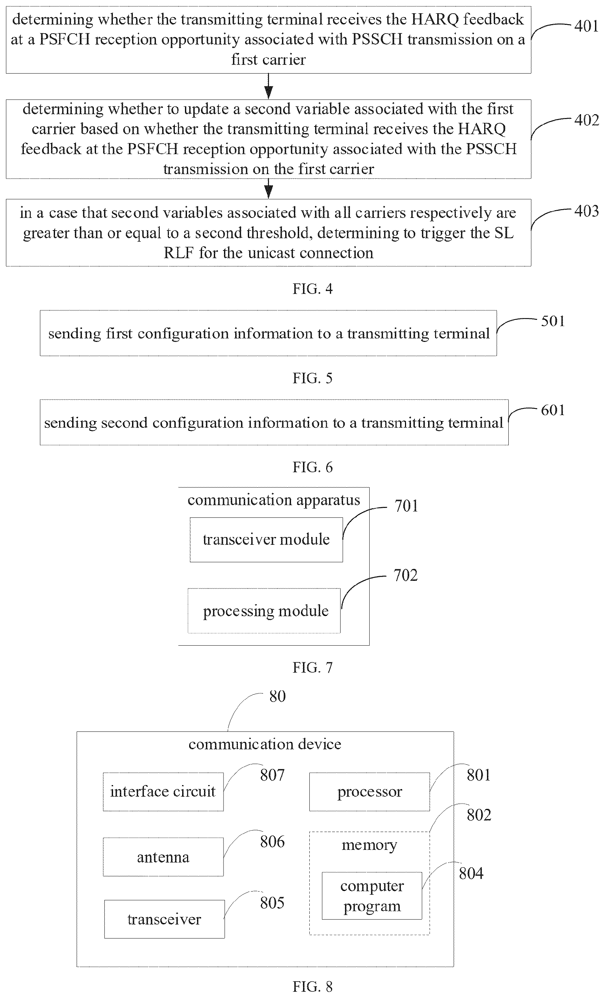

It needs to be noted that in some embodiments of the present disclosure, a unicast connection is established between the transmitting terminal and the receiving terminal, and the transmitting terminal may maintain one second variable for each carrier associated with the unicast connection independently, and the second variable is configured to count a number of consecutive DTXs of the unicast connection on a carrier corresponding to the second variable. The transmitting terminal maintaining the second variable may be understood as the transmitting terminal managing the second variable. For example, the transmitting terminal may initialize the second variable to 0, or reset it to 0, or add 1. That is to say, if the transmitting terminal and the receiving terminal perform SL communication via the plurality of carriers, the transmitting terminal counts the number of DTX times for each carrier associated with the unicast connection. Optionally, the transmitting terminal maintains a consecutive DTX detection variable (such as the above second variable) for each carrier associated with the unicast connection. The second variable is configured to count the number of consecutive DTX times for the unicast connection on the carrier corresponding to the second variable. Specifically, referring to FIG. 4, it is a flowchart of another method for detecting SL RLF according to an embodiment of the present disclosure. It needs to be noted that the method is performed by the transmitting terminal. As shown in FIG. 4, the method may include but is not limited to the following steps at 401-403.

At 401, for the unicast connection, it is determined whether the transmitting terminal receives the HARQ feedback at a PSFCH reception opportunity associated with PSSCH transmission on a first carrier.

In the embodiments of the present disclosure, the first carrier is any carrier among the plurality of carriers associated with the unicast connection. The unicast connection is a unicast connection between the transmitting terminal and the receiving terminal, and the unicast connection is associated with the plurality of carriers. That is, the unicast connection between the transmitting terminal and the receiving terminal supports the plurality of carriers. In other words, the transmitting terminal and the receiving terminal are configured with a carrier aggregation, and the transmitting terminal and the receiving terminal perform sidelink communication via the plurality of carriers. The transmitting terminal counts a number of DTXs for each carrier associated with this unicast connection. It needs to be noted that, in this embodiment, the transmitting terminal maintains a consecutive DTX detection variable (such as the above second variable) for each carrier associated with the unicast connection. The second variable is configured to count the number of continuous DTXs for the unicast connection on the carrier corresponding to the second variable. In this way, for the unicast connection, the transmitting terminal may determine whether the transmitting terminal receives the HARQ feedback at the PSFCH reception opportunities associated with the PSSCH transmission on different carriers associated with the unicast connection, so as to determine whether to trigger the SL RLF for the unicast connection based on whether the transmitting terminal receives the HARQ feedback at the PSFCH reception opportunities associated with the PSSCH transmission on different carriers associated with the unicast connection, and respective second variables associated with different carriers associated with the unicast connection.

At 402, for the unicast connection, it is determined whether to update a second variable associated with the first carrier based on whether the transmitting terminal receives the HARQ feedback at the PSFCH reception opportunity associated with PSSCH transmission on the first carrier.

In a possible implementation, the first carrier is any carrier among the plurality of carriers associated with the unicast connection. For the unicast connection, if the transmitting terminal does not receive the HARQ feedback at the PSFCH reception opportunity associated with PSSCH transmission on the first carrier associated with the unicast connection, then the second variable associated with the first carrier is determined to be incremented by 1. Optionally, for the unicast connection, if the transmitting terminal does not receive the HARQ feedback at the PSFCH reception opportunities associated with PSSCH transmission on different carriers associated with the unicast connection, it is determined that the respective second variables associated with the different carriers associated with the unicast connection are incremented by 1.

As an example, the transmitting terminal counts the number of consecutive DTXs on each carrier associated with the unicast connection. For example, each carrier corresponds to a different HARQ entity, and the different HARQ entities corresponding to each carrier may count the number of DTXs on each carrier, respectively. Optionally, the transmitting terminal counts whether the HARQ feedback is received at each PSFCH reception opportunity associated with each PSSCH transmission on each carrier, that is, counting whether the DTX occurs. If no HARQ feedback is detected at a PSFCH reception opportunity associated with PSSCH transmission on a certain carrier, the transmitting terminal increments the second variable corresponding to the carrier by 1.

For example, taking the unicast connection associated with the carrier 1 and the carrier 2 as an example, for this unicast connection, the transmitting terminal fails to detect the HARQ feedback at the PSFCH reception opportunity associated with the PSSCH sent on the carrier 1, then the transmitting terminal increments the second variable corresponding to the carrier 1 by 1, and the transmitting terminal does not detect the HARQ feedback at the PSFCH reception opportunity associated with the PSSCH sent on the carrier 2, then the transmitting terminal increments the second variable corresponding to the carrier 2 by 1.

At 403, in a case that all second variables associated with all carriers associated with the unicast connection respectively are greater than or equal to the second threshold, it is determined to trigger the SL RLF for the unicast connection.

In an implementation, if the second variables associated with different carriers respectively are greater than or equal to the second threshold, the transmitting terminal considers that the SL RLF based on HARQ feedback occurs for the unicast connection, that is, it is determined that the unicast connection has triggered the SL RLF. That is, if the second variable associated with any carrier is greater than or equal to the second threshold, the transmitting terminal considers that the SL RLF based on HARQ feedback occurs on the carrier. The "SL RLF based on HARQ feedback occurs on the carrier" described in the present disclosure means a state in which the second variable associated with the carrier reaches the maximum threshold. It may have other naming forms, such as "RLF on a carrier", etc., which is not specifically limited in the disclosure. The MAC layer of the transmitting terminal may notify the RRC layer of the transmitting terminal that the SL RLF based on HARQ feedback occurs on the carrier. When all the second variables associated with all carriers respectively are greater than or equal to the second threshold, the transmitting terminal believes that the SL RLF based on HARQ feedback occurs for the unicast connection, and the MAC layer of the transmitting terminal may notify the RRC layer of the transmitting terminal that the SL RLF based on HARQ feedback occurs for the unicast connection. The RRC layer releases the unicast connection so that the transmitting terminal and the receiving terminal may re-establish the unicast connection to ensure normal communication.

In some embodiments of the present disclosure, for the unicast connection, if the transmitting terminal receives the HARQ feedback at the PSFCH reception opportunity associated with PSSCH transmission on any carrier associated with the unicast connection, it is determined that the second variable associated with the carrier is reset to 0. That is, for the unicast connection, if the transmitting terminal detects the HARQ feedback on the PSFCH reception opportunity associated with PSSCH transmission on any carrier associated with the unicast connection, the transmitting terminal resets the second variable associated with the carrier to 0.

It needs to be noted that, in the embodiments of the present disclosure, when a unicast connection is established, the transmitting terminal initializes each second variable corresponding to each carrier associated with the unicast connection to 0 respectively. Alternatively, when the carrier aggregation is enabled, the transmitting terminal initializes each second variable corresponding to each carrier associated with the unicast connection to 0 respectively.

In an implementation, if the second threshold is configured according to the terminal granularity (per UE), the transmitting terminal initializes each second variable corresponding to each carrier to 0 when the second threshold is reconfigured or initially configured, in which the initial configuration may be understood that the network device configures the second threshold for the transmitting terminal for the first time. Alternatively, in another implementation, if the second threshold is configured according to carrier granularity (per carrier), the transmitting terminal initializes a second variable corresponding to a certain carrier to 0 when the second threshold corresponding to the carrier is initially configured or reconfigured, in which the initial configuration may be understood that the network device configures the second threshold for the carrier for the first time.

In a possible implementation, if the second threshold is configured according to carrier granularity (per carrier), a number of carrier-associated second variables is greater than or equal to a number of carrier-associated second thresholds. For example, a unicast connection supports three carriers (such as carrier 1, carrier 2, and carrier 3), and second variables corresponding to the three carriers are second variable 1, second variable 2, and second variable 3, respectively. If the second threshold is configured according to the carrier granularity (per carrier), the number of the second thresholds may be 3 (such as second threshold a, second threshold b, and third threshold c), the threshold corresponding to the carrier 1 or the second variable 1 is the second threshold a, the threshold corresponding to the carrier 2 or the second variable 2 is the second threshold b, and the threshold corresponding to the carrier 3 or the second variable 3 is the second threshold c. For another example, a unicast connection supports 3 carriers (such as carrier 1, carrier 2, and carrier 3), and the second variables corresponding to the three carriers are second variable 1, second variable 2, and second variable 3, respectively. If the second threshold is a threshold configured according to the carrier granularity (per carrier), the number of second thresholds may be 2 (such as second threshold a and second threshold b), the threshold corresponding to the carrier 1 or the second variable 1 is the second threshold a, the threshold corresponding to the carrier 2 or the second variable 2 is the second threshold b, and the threshold corresponding to the carrier 3 or the second variable 3 is the second threshold a. For another example, a unicast connection supports three carriers (such as carrier 1, carrier 2, and carrier 3), and second variables corresponding to the three carriers are second variable 1, second variable 2, and second variable 3, respectively. If the second threshold is a threshold configured according to the carrier granularity (per carrier), the number of second threshold may be 1 (such as the second threshold a), the threshold corresponding to the carrier 1 or the second variable 1 is the second threshold a, the threshold corresponding to the carrier 2 or the second variable 2 is the second threshold a, and the threshold corresponding to the carrier 3 or the second variable 3 is the second threshold a.

Optionally, in some embodiments of the present disclosure, the transmitting terminal may obtain the second threshold via second configuration information. As an example, the second configuration information may be configuration information sent by the network device to the transmitting terminal, or may be pre-configuration information. That is, the transmitting terminal may obtain the second threshold from the configuration or pre-configuration of the network device.

For example, a transmitting terminal in an RRC connected state may obtain the second threshold via a dedicated signaling, a transmitting terminal in an RRC IDLE/INACTIVE state may obtain the second threshold via a SIB, and a transmitting terminal in OOC may obtain the second threshold via pre-configuration.

Optionally, in some embodiments of the present disclosure, it is determined that the second variable corresponding to any carrier is greater than or equal to the second threshold, and an allocation mode of SL transmission resources of the transmitting terminal is a second allocation mode, then the transmitting terminal triggers resource reselection and/or carrier reselection, in which the second allocation mode is a mode where the transmitting terminal autonomously selects the SL transmission resources. A second variable corresponding to a reselected carrier is less than the second threshold; or a second variable corresponding to a reselected carrier is less than or equal to a third threshold, and the third threshold is less than the second threshold. In a possible implementation, if the second threshold is configured according to carrier granularity (per carrier), the second variable corresponding to any carrier being greater than or equal to the second threshold means specifically that the second variable corresponding to the any carrier is greater than or equal to the second threshold associated with the any carrier.

For example, the transmitting terminal in the second allocation mode (such as the above mode 2) detects that a second variable associated with a certain carrier associated with the unicast connection is greater than or equal to the second threshold, and the transmitting terminal triggers the resource reselection and/or the carrier reselection. Optionally, the transmitting terminal may reselect a carrier, and reselect resources on the reselected carrier. That is to say, the transmitting terminal does not perform SL transmission on the carrier whose associated second variable is greater than or equal to the second threshold, but the transmitting terminal reselects the carrier and reselects the resources on the reselected carrier, in which the second variable associated with the carrier reselected by the transmitting terminal is less than the second threshold (that is, does not reach the second threshold, or the second variable associated with the carrier reselected by the transmitting terminal is less than or equal to a third threshold, and the third threshold is less than the second threshold). The SL transmission includes but is not limited to at least one of: PSSCH transmission, PSCCH transmission, PSFCH transmission, etc. For example, the reselected carrier may need to meet other conditions in the related art, including but not limited to a channel busy ratio (CBR), etc., which are not specifically limited in the present disclosure and will not be repeated again. That is to say, for the reselected carrier in the present disclosure, the impact of DTX based on HARQ feedback is also considered based on the fact that other conditions in the related art may be met, in which the other conditions include but not limited to the CBR example, which is only for the convenience of understanding of those skilled in the art and cannot be used as a specific limitation of the present disclosure. That is to say, based on the fact that the reselected carrier may need to meet other conditions in the related art, the impact of DTX based on HARQ feedback may be also considered, which will not be repeated again.

It needs to be noted that, in some embodiments of the present disclosure, the transmitting terminal may obtain a third threshold via third configuration information. For example, the third threshold is configured according to terminal granularity. As an example, the third configuration information may be configuration information sent by the network device to the transmitting terminal, or may be pre-configuration information. That is, the transmitting terminal may obtain the third threshold from the configuration or pre-configuration of the network device. For example, a transmitting terminal in an RRC connected state may obtain the third threshold via a dedicated signaling, a transmitting terminal in an RRC IDLE/INACTIVE state may obtain the third threshold via a SIB, and a transmitting terminal in OOC may obtain the third threshold via pre-configuration.

Optionally, in some embodiments of the present disclosure, if the second variable is greater than or equal to the second threshold, the transmitting terminal sends first information to the network device, and the first information indicates that the SL RLF based on HARQ feedback occurs on the carrier corresponding to the second variable. The "SL RLF based on HARQ feedback occurs on the carrier" described in the present disclosure means a state in which the second variable associated with the carrier reaches the maximum threshold. It may have other naming forms, such as "RLF on a carrier", etc., which is not specifically limited in the disclosure. The transmitting terminal is in an RRC connected state. For example, if a connected state transmitting terminal in a first allocation mode (such as the above mode 1) and/or a second allocation mode (such as the above mode 2) detects that at least one second variable associated with at least one carrier is greater than or equal to a second threshold, the transmitting terminal may report it to the network device. For example, when the transmitting terminal detects that the at least one second variable associated with the at least one carrier is greater than or equal to the second threshold, the transmitting terminal sends the first information to the network device, indicating via the first information that the SL RLF based on HARQ feedback occurs on the carrier corresponding to the second variable. For example, the transmitting terminal triggers a report of the SL RLF based on HARQ feedback (there may be other naming forms, which are not specifically limited). The "SL RLF based on HARQ feedback occurs on the carrier" described in the present disclosure means a state in which the second variable associated with the carrier reaches the maximum threshold. It may have other naming forms, such as "RLF on a carrier", etc., which is not specifically limited in the disclosure.

Optionally, in some embodiments of the present disclosure, the transmitting terminal may send the first information to the network device via sidelink UE information (SUI). Alternatively, the transmitting terminal may send the first information to the network device via UE assistance information (UAI). Alternatively, the transmitting terminal may send the first information to the network device via an MAC control element (CE).

For example, the transmitting terminal may report to the network device in the form of SUI/UAI/MAC CE, etc., indicating to the network device that a second variable associated with a certain carrier is greater than or equal to a second threshold. Optionally, if it is indicated by the SUI/UAI, by carrying a carrier ID, the SUI/UAI indication may indicate the network device that a second variable associated with a carrier corresponding to the carrier ID is greater than or equal to the second threshold. if it is indicated by the by MAC CE, a bitmap may be used for indication, and each bit in the bitmap corresponds to a carrier. For example, the i-th bit indicates whether a second variable associated with a carrier associated with carrier ID i is greater than or equal to the second threshold. For example, if the value of the i-th bit is 1, it means that the second variable associated with the carrier associated with the carrier ID i is greater than or equal to the second threshold; if the value of the i-th bit is 0, it means that the second variable associated with the carrier associated with the carrier ID i does not reach the second threshold, that is, the second variable associated with the carrier associated with the carrier ID i is less than the second threshold. For example, if the value of the i-th bit is 0, it means that the second variable associated with the carrier associated with the carrier ID i is greater than or equal to the second threshold; if the value of the i-th bit is 1, it means that the second variable associated with the carrier associated with the carrier ID i does not reach the second threshold, that is, the second variable associated with the carrier associated with the carrier ID i is less than the second threshold. This is not limited in the disclosure.

That is, when the transmitting terminal detects that no HARQ feedback is received at the PSFCH reception opportunity, it is counted that the DTX has occurred for one time. In embodiments of the present disclosure, the second variable may be configured to count a number of consecutive DTXs of the unicast connection on the carrier corresponding to the second variable. That is, the number of DTXs on each carrier is counted separately. When the transmitting terminal receives the HARQ feedback on a certain carrier associated with the unicast connection, the transmitting terminal resets the second variable corresponding to the carrier to 0. If the transmitting terminal does not receive the HARQ feedback at the PSFCH reception opportunity associated with PSSCH transmission on any carrier associated with the unicast connection, the second variable corresponding to the carrier is incremented by 1. When the second variable corresponding to the carrier is greater than or equal to the second threshold, it is determined that the carrier has triggered the SL RLF based on HARQ feedback. The "SL RLF based on HARQ feedback occurs on the carrier" described in the present disclosure means a state in which the second variable associated with the carrier reaches the maximum threshold. It may have other naming forms, such as "RLF on a carrier", etc., which is not specifically limited in the disclosure. When respective second variables corresponding to all carriers associated with the unicast connection are greater than or equal to the second threshold, it may be determined to trigger the SL RLF for the unicast connection.

It needs to be noted that "whether the HARQ feedback is received" mentioned in this disclosure is detected according to the PSFCH opportunity. That is, if there is a PSFCH on a carrier that needs to be received, it is detected whether HARQ feedback is received at the reception timing of the PSFCH on the carrier. The PSFCHs on different carriers may be interleaved, depending on which carrier the scheduled PSSCH is. For example, if the scheduled PSSCH is on the carrier 1, it is detected whether the HARQ feedback is received at the PSFCH reception opportunity associated with the PSSCH on the carrier 1. If the HARQ feedback is not received at the PSFCH reception opportunity associated with the PSSCH on the carrier 1, the second variable corresponding to the carrier 1 is incremented by 1. For example, if the scheduled PSSCH is on the carrier 2, it is detected whether the HARQ feedback is received at the PSFCH reception opportunity associated with the PSSCH on the carrier 2. If the HARQ feedback is not received at the PSFCH reception opportunity associated with the PSSCH on the carrier 2, the second variable corresponding to the carrier 2 is incremented by 1.

In the embodiments of the present disclosure, the unicast connection between the transmitting terminal and the receiving terminal supports the plurality of carriers, and the transmitting terminal may maintain respective DTX detection variables (i.e., the above second variables) on different carriers for each unicast connection. In this way, when all the second variables associated with all carriers reach the second threshold, the transmitting terminal determines that the unicast connection has triggered the SL RLF, which solves the problem of how to effectively detect the RLF in the SL carrier aggregation scenario, so that the RLF mechanism may be supported in the carrier aggregation scenario of the SL communication.

It may be understood that the above embodiments describe the implementations of the method for detecting SL RLF according to the embodiments of the present disclosure from the terminal side (i.e., the above transmitting terminal). The embodiments of the present disclosure further provide another method for detecting SL RLF. The implementations of the method for detecting SL RLF may be described below from the network device side. Referring to FIG. 5, it is a flowchart of another method for detecting SL RLF according to an embodiment of the present disclosure. It needs to be noted that the method is performed by a network device. As shown in FIG. 5, the method may include but is not limited to the following step at 501.

At 501, first configuration information is sent to a transmitting terminal.

In an embodiment of the present disclosure, the first configuration information includes a first threshold associated with a first variable, and the transmitting terminal maintains one first variable for each unicast connection. The unicast connection is a unicast connection established between the transmitting terminal and a receiving terminal on an SL. The unicast connection supports a plurality of carriers. The transmitting terminal and the receiving terminal perform SL communication via the plurality of carriers. The plurality of carriers are associated with the unicast connection, and the first variable is configured to count a number of consecutive DTXs of the unicast connection on the plurality of carriers. The first variable is used by the transmitting terminal to determine whether to trigger the SL RLF for the unicast connection. In the embodiments of the present disclosure, for the relevant description of the first variable and the implementation of the transmitting terminal determining to trigger the SL RLF for the unicast connection, reference may be made to the description of the above embodiments at the transmitting terminal side, which will not be repeated here.

In some embodiments of the present disclosure, the first threshold may be configured according to terminal granularity. The implementation of the first threshold may be found in the description of the above embodiments at the transmitting terminal side, which will not be repeated here.

In the embodiments of the present disclosure, the unicast connection between the transmitting terminal and the receiving terminal supports the plurality of carriers, and the transmitting terminal may maintain the same DTX detection variable (i.e., the above-mentioned first variable) on all carriers for each unicast connection. In this way, the network device may configure a first threshold of the first variable for the transmitting terminal, so that when the transmitting terminal determines that the first variable reaches the first threshold, it is determined that the unicast connection has triggered the SL RLF, which solves the problem of how to effectively detect the RLF in the SL carrier aggregation scenario, so that the RLF mechanism may be supported in the carrier aggregation scenario of the SL communication.

The embodiments of the present disclosure further provide another method for detecting SL RLF. The implementations of the method for detecting SL RLF may be described below from the network device side. Referring to FIG. 6, it is a flowchart of another method for detecting SL RLF according to an embodiment of the present disclosure. It needs to be noted that the method is performed by a network device. As shown in FIG. 6, the method may include but is not limited to the following step at 601.

At 601, second configuration information is sent to a transmitting terminal.

In an embodiment of the present disclosure, the transmitting terminal and the receiving terminal establish a unicast connection on an SL, the unicast connection supports a plurality of carriers, the transmitting terminal and the receiving terminal perform SL communication via the plurality of carriers, and the plurality of carriers are associated with the unicast connection. The second configuration information includes a second threshold associated with a second variable, the transmitting terminal maintains one second variable for each carrier independently, the second variable is configured to count a number of consecutive DTXs of the unicast connection on a carrier corresponding to the second variable, and the second variable is used by the transmitting terminal to determine whether to trigger the SL RLF for the unicast connection. In the embodiments of the present disclosure, for the relevant description of the second variable and the implementation of the transmitting terminal determining whether to trigger the SL RLF for the unicast connection, reference may be made to the description of the above embodiments at the transmitting terminal side, which will not be repeated here.

In some embodiments of the present disclosure, the second threshold is configured according to terminal granularity. In some other embodiments, the second threshold is configured according to carrier granularity. The implementation of the second threshold may be found in the description of the above embodiments at the transmitting terminal side, which will not be repeated here.

Optionally, in some embodiments of the present disclosure, the network device may send third configuration information to the transmitting terminal, in which the third configuration information includes a third threshold, the third threshold is less than the second threshold, and the third threshold is used by the transmitting terminal to reselect the carrier. An allocation mode of SL transmission resources of the transmitting terminal is a second allocation mode, and the second allocation mode is a mode where the transmitting terminal autonomously selects the SL transmission resources. The implementation of the third threshold may be found in the description of the above embodiments at the transmitting terminal side, which will not be repeated here.

Optionally, in some embodiments of the present disclosure, the network device may receive first information sent by the transmitting terminal, in which the first information indicates that the SL RLF based on HARQ feedback occurs on the carrier corresponding to the second variable. The "SL RLF based on HARQ feedback occurs on the carrier" described in the present disclosure means a state in which the second variable associated with the carrier reaches the maximum threshold. It may have other naming forms, such as "RLF on a carrier", etc., which is not specifically limited in the disclosure. In an implementation, the network device may receive the first information sent by the transmitting terminal via SUI, or UAI or MAC CE. The implementation of the first information may refer to the description of the above embodiments at the transmitting terminal side, which will not be repeated here.

In the embodiments of the present disclosure, the unicast connection between the transmitting terminal and the receiving terminal supports the plurality of carriers, and the transmitting terminal may maintain respective DTX detection variables (i.e., the above-mentioned second variables) on different carriers for each unicast connection. In this way, the network device may configure a second threshold of the second variable for the transmitting terminal, so that when the transmitting terminal determines that all the second variables associated with all carriers reaches the second threshold, it is determined that the unicast connection has triggered the SL RLF, which solves the problem of how to effectively detect the RLF in the SL carrier aggregation scenario, so that the RLF mechanism may be supported in the carrier aggregation scenario of the SL communication.

In the above embodiments according to the present disclosure, the methods in the above embodiments of the present disclosure are introduced from the perspectives of a network device and a terminal (such as the above transmitting terminal). In order to implement the various functions of the method in the above embodiments of the present disclosure, the network device and the terminal may include a hardware structure and a software module, and implement the above various functions in the form of the hardware structure, the software module, or the hardware structure plus the software module. Any of the above functions may be implemented in the form of the hardware structure, the software module, or a combination of the hardware structure and the software module.

Referring to FIG. 7, it is a structural diagram of a communication apparatus 70 according to an embodiment of the present disclosure. The communication apparatus 70 shown in FIG. 7 may include a transceiver module 701 and a processing module 702. The transceiver module 701 may include a transmitting module and/or a receiving module. The transmitting module is used to implement a transmitting function, and the receiving module is used to implement a receiving function. The transceiver module 701 may implement a transmitting function and/or a receiving function.

The communication apparatus 70 may be an apparatus for detecting SL RLF. For example, the communication apparatus 70 may be a terminal (such as the transmitting terminal in the above method embodiments), or an apparatus in the terminal, or an apparatus that may be used in conjunction with the terminal. Alternatively, the communication apparatus 70 may be a network device, an apparatus in a network device, or an apparatus that may be used in conjunction with a network device.

When the communication apparatus 70 is a terminal (such as the transmitting terminal in the above method embodiments), the processing module 702 is configured to determine reception of HARQ feedback on a PSFCH. The processing module 702 is also configured to determine whether to trigger the SL RLF for a unicast connection based on the reception of HARQ feedback on the PSFCH. The unicast connection is a unicast connection established between the transmitting terminal and a receiving terminal on an SL, the transmitting terminal and the receiving terminal perform SL communication via a plurality of carriers, and the plurality of carriers are associated with the unicast connection unicast.

In an implementation, the transmitting terminal maintains one first variable for each unicast connection, and the first variable is configured to count a number of consecutive DTXs of the unicast connection on the plurality of carriers.

In a possible implementation, the processing module 702 is specifically configured to: for the unicast connection, determine whether the transmitting terminal receives the HARQ feedback at a PSFCH reception opportunity associated with PSSCH transmission on any carrier among the plurality of carriers. The processing module 702 is specifically configured to: for the unicast connection, determine whether to update the first variable based on whether the transmitting terminal receives the HARQ feedback at the PSFCH reception opportunity associated with the PSSCH transmission on any carrier among the plurality of carriers; and determine to trigger the SL RLF for the unicast connection in a case that the first variable is greater than or equal to a first threshold.

In a possible implementation, the processing module 702 is specifically configured to: for the unicast connection, determine that the first variable is incremented by 1 in a case that the transmitting terminal does not receive the HARQ feedback on the PSFCH reception opportunity associated with the PSSCH transmission on any carrier among the plurality of carriers.

In an implementation, the processing module 702 is further configured to: for the unicast connection, determine that the first variable is reset as 0 in a case that the transmitting terminal detects the HARQ feedback on a PSFCH reception opportunity associated with PSSCH transmission on any carrier among the plurality of carriers.

In an implementation, the processing module 702 is further configured to: obtain the first threshold via first configuration information, in which the first threshold is configured according to terminal granularity.

In an implementation, the transmitting terminal maintains one second variable for each carrier independently, and the second variable is configured to count a number of consecutive DTXs of the unicast connection on a carrier corresponding to the second variable.

In a possible implementation, the processing module 702 is specifically configured to: for the unicast connection, determine whether the transmitting terminal receives the HARQ feedback at a PSFCH reception opportunity associated with PSSCH transmission on a first carrier, in which the first carrier is any carrier among the plurality of carriers associated with the unicast connection. The processing module 702 is specifically configured to: for the unicast connection, determine whether to update a second variable associated with the first carrier based on whether the transmitting terminal receives the HARQ feedback at the PSFCH reception opportunity associated with the PSSCH transmission on the first carrier; and in a case that all second variables associated with all carriers associated with the unicast connection respectively are greater than or equal to a second threshold, determining to trigger the SL RLF for the unicast connection.

In a possible implementation, the processing module 702 is further configured to: obtain the second threshold via second configuration information, in which the second threshold is configured according to terminal granularity.

In an implementation, the processing module 702 is specifically configured to: for the unicast connection, determine that the second variable associated with the first carrier is incremented by 1 in a case that the transmitting terminal does not receive the HARQ feedback at the PSFCH reception opportunity associated with the PSSCH transmission on the first carrier.

In a possible implementation, the processing module 702 is further configured to: for the unicast connection, determine that the second variable associated with the first carrier is reset as 0 in a case that the transmitting terminal receives the HARQ feedback at the PSFCH reception opportunity associated with the PSSCH transmission on the first carrier.

In a possible implementation, the processing module 702 is further configured to determine that the second variable corresponding to the first carrier is greater than or equal to the second threshold, and an allocation mode of SL transmission resources of the transmitting terminal is a second allocation mode, trigger resource reselection and/or carrier reselection, in which the second allocation mode is a mode where the transmitting terminal autonomously selects the SL transmission resources. A second variable corresponding to a reselected carrier is less than the second threshold; or a second variable corresponding to a reselected carrier is less than or equal to a third threshold, in which the third threshold is less than the second threshold.

In a possible implementation, the processing module 702 is further configured to: obtain the third threshold via third configuration information, in which the third threshold is configured according to terminal granularity.

In a possible implementation, the transceiver module 701 is configured to: in a case that the second variable is greater than or equal to the second threshold, send first information to the network device, in which the first information indicates that the SL RLF based on HARQ feedback occurs on the carrier corresponding to the second variable. The "SL RLF based on HARQ feedback occurs on the carrier" described in the present disclosure means a state in which the second variable associated with/corresponding to the carrier reaches the maximum threshold. It may have other naming forms, such as "RLF on a carrier", etc., which is not specifically limited in the disclosure. The transmitting terminal is in an RRC connected state.

In a possible implementation, the transceiver module 701 is specifically configured to: send the first information to the network device via SUI; send the first information to the network device via UAI; or send the first information to the network device via MAC CE.

When the communication apparatus 70 is a network device, the transceiver module 701 is configured to send first configuration information to a transmitting terminal. The first configuration information includes a first threshold associated with a first variable, and the transmitting terminal maintains one first variable for each unicast connection, and the unicast connection is a unicast connection established between the transmitting terminal and a receiving terminal on an SL, and the transmitting terminal and the receiving terminal perform SL communication via a plurality of carriers, and the plurality of carriers are associated with the unicast connection, and the first variable is configured to count a number of consecutive DTXs of the unicast connection on the plurality of carriers. The first variable is used by the transmitting terminal to determine whether to trigger the SL RLF for the unicast connection.

In an implementation, the first threshold is configured according to terminal granularity.

When the communication apparatus 70 is a network device, the transceiver module 701 is configured to send second configuration information to a transmitting terminal. The transmitting terminal and a receiving terminal establish a unicast connection on an SL, and the transmitting terminal and the receiving terminal perform SL communication via a plurality of carriers, and the plurality of carriers are associated with the unicast connection; the second configuration information includes a second threshold associated with a second variable, the transmitting terminal maintains one second variable for each carrier independently, and the second variable is configured to count a number of consecutive DTXs of the unicast connection on a carrier corresponding to the second variable. The second variable is used by the transmitting terminal to determine whether to trigger the SL RLF for the unicast connection. The second threshold is configured according to the terminal granularity.

In an implementation, the transceiver module 701 is further configured to send third configuration information to the transmitting terminal. The third configuration information includes a third threshold, the third threshold is less than the second threshold, and the third threshold is used by the transmitting terminal to reselect the carrier. An allocation mode of SL transmission resources of the transmitting terminal is a second allocation mode, and the second allocation mode is a mode where the transmitting terminal autonomously selects the SL transmission resources.

In an implementation, the transceiver module 701 is further configured to receive first information sent by the transmitting terminal. The first information is configured to indicate that the SL RLF based on HARQ feedback is occurred on the carrier associated with/corresponding to the second variable. The "SL RLF based on HARQ feedback occurs on the carrier" described in the present disclosure means a state in which the second variable associated with the carrier reaches the maximum threshold. It may have other naming forms, such as "RLF on a carrier", etc., which is not specifically limited in the disclosure.

In a possible implementation, the transceiver module 701 is specifically configured to: receive the first information sent by the transmitting terminal via SUI; receive the first information sent by the transmitting terminal via UAI; or receive the first information sent by the transmitting terminal via MAC CE.

Regarding the apparatus in the above embodiments, the specific manner in which each module performs operations has been described in detail in the embodiments of the method, which will not be repeated here.

FIG. 8 is a structural diagram of a communication device 80 according to an embodiment of the present disclosure. The communication device 80 may be a network device, a terminal (such as the transmitting terminal in the above method embodiments), a chip, a chip system, or a processor that supports the network device to implement the above method, or a chip, a chip system, or a processor that supports the transmitting terminal to implement the above method. The device may be used to implement the method described in the above method embodiments. For details, reference may be made to the description in the above method embodiments.

The communication device 80 may include one or more processors 801. The processor 801 may be a general-purpose processor or a dedicated processor. For example, it may be a baseband processor or a central processing unit. The baseband processor may be used to process communication protocols and communication data, and the central processing unit may be used to control communication devices (such as a base station, a baseband chip, a terminal, a terminal chip, a DU or a CU, etc.), execute computer programs, and process data of the computer programs.

Optionally, the communication device 80 may further include one or more memories 802, on which a computer program 804 may be stored. When the computer program 804 is executed by the processor 801, the communication device 80 is caused to perform the method described in the above method embodiments. Optionally, data may also be stored in the memory 802. The communication device 80 and the memory 802 may be provided separately or integrated together.

Optionally, the communication device 80 may further include a transceiver 805 and an antenna 806. The transceiver 805 may be referred to as a transceiver unit, a transceiving machine, or a transceiver circuit, etc., and is used to implement transceiver functions. The transceiver 805 may include a receiver and a transmitter. The receiver may be referred to as a receiving machine or a receiving circuit, etc., and is used to implement a receiving function. The transmitter may be referred to as a transmitting machine or a transmitting circuit, etc., and is used to implement the transmitting function.

Optionally, the communication device 80 may further include one or more interface circuits 807. The interface circuit 807 is used to receive code instructions and transmit them to the processor 801. When the code instructions are executed by the processor 801, the communication device 80 is caused to perform the method described in the above method embodiments.

The communication device 80 is a terminal (such as the transmitting terminal in the above method embodiments): the processor 801 is configured to perform the steps at 201 and 202 in FIG. 2, the steps at 301, 302 and 303 in FIG. 3, or the steps 401, 402 and 403 in FIG. 4.

The communication device 80 is a network device: the transceiver 805 is configured to perform the step at 501 in FIG. 5, or the at step 601 in FIG. 6.

In an implementation, the processor 801 may include a transceiver for implementing receiving and transmitting functions. For example, the transceiver may be a transceiver circuit, or an interface, or an interface circuit. The transceiver circuit, interface or interface circuit used to implement the receiving and transmitting functions may be separate or integrated. The above-mentioned transceiver circuit, interface or interface circuit may be used for reading and writing codes/data, or the above-mentioned transceiver circuit, interface or interface circuit may be used for transmitting or delivering signals.

In an implementation, the processor 801 may store a computer program, and the computer program is running on the processor 801, the communication device 80 may be caused to perform the method described in the above method embodiments. The computer program may be embedded/solidified in the processor 801. In this case, the processor 801 may be implemented by hardware.

In an implementation, the communication device 80 may include a circuit, which may implement the functions of sending, receiving, or communicating in the aforementioned method embodiments. The processor and transceiver described in the present disclosure may be implemented on an integrated circuit (IC), an analog IC, a radio frequency integrated circuit RFIC, a mixed signal IC, an application specific integrated circuit (ASIC), a printed circuit board (PCB), an electronic device, etc. The processor and transceiver may also be manufactured using various IC process technologies, such as a complementary metal oxide semiconductor (CMOS), a nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be a network device or a terminal (such as the transmitting terminal in the above method embodiments), but the scope of the communication device described in the present disclosure is not limited herein, and the structure of the communication device may not be limited to FIG. 11. The communication device may be a stand-alone device or may be part of a larger device. For example, the communication device may be:
(1) an independent integrated circuit IC, or a chip, or a chip system or a subsystem;
(2) a collection of one or more ICs. Optionally, the IC collection may also include storage components for storing data and computer programs;
(3) ASIC, such as modem;
(4) modules that may be embedded in other devices;
(5) a receiver, a terminal, an intelligent terminal, a cellular phone, a wireless device, a handheld device, a mobile unit, a vehicle-mounted device, a network device, a cloud device, an artificial intelligence device, etc.;
(6) Others, etc.

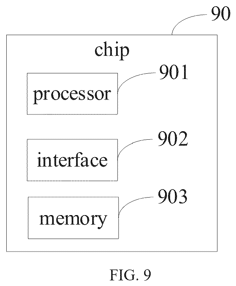

For the case where the communication device may be a chip or a chip system, reference may be made to the structural diagram of the chip shown in FIG. 9. The chip shown in FIG. 9 includes a processor 901 and an interface 902. There may be one or more processors 901, and there may be a plurality of interfaces 902.

In the case that the chip is used to implement the functions of the network device (such as the access network device in the above method embodiments) in the embodiments of the present disclosure,

The processor 901 is configured to determine reception of HARQ feedback on a PSFCH. The processor 901 is also configured to determine whether to trigger the SL RLF for a unicast connection based on the reception of HARQ feedback on the PSFCH. The unicast connection is a unicast connection established between the transmitting terminal and a receiving terminal on an SL, and the transmitting terminal and the receiving terminal perform SL communication via a plurality of carriers, and the plurality of carriers are associated with the unicast connection.

In an implementation, the transmitting terminal maintains one first variable for each unicast connection, where the first variable is configured to count a number of consecutive DTXs of the unicast connection on the plurality of carriers.

In a possible implementation, the processor 901 is specifically configured to: for the unicast connection, determine whether the transmitting terminal receives the HARQ feedback at a PSFCH reception opportunity associated with PSSCH transmission on any carrier among the plurality of carriers. The processor 901 is specifically configured to: for the unicast connection, determine whether to update the first variable based on whether the transmitting terminal receives the HARQ feedback at the PSFCH reception opportunity associated with the PSSCH transmission on any carrier among the plurality of carriers; and determine to trigger the SL RLF for the unicast connection in a case that the first variable is greater than or equal to a first threshold.

In a possible implementation, the processor 901 is specifically configured to: for the unicast connection, determine that the first variable is incremented by 1 in a case that the transmitting terminal does not receive the HARQ feedback on the PSFCH reception opportunity associated with the PSSCH transmission on any carrier among the plurality of carriers.

In an implementation, the processor 901 is further configured to: for the unicast connection, determine that the first variable is reset as 0 in a case that the transmitting terminal detects the HARQ feedback on a PSFCH reception opportunity associated with PSSCH transmission on any carrier among the plurality of carriers.

In an implementation, the processor 901 is further configured to: obtain the first threshold via first configuration information, in which the first threshold is configured according to terminal granularity.

In an implementation, the transmitting terminal maintains one second variable for each carrier independently, and the second variable is configured to count a number of consecutive DTXs of the unicast connection on a carrier corresponding to the second variable.

In a possible implementation, the processor 901 is specifically configured to: for the unicast connection, determine whether the transmitting terminal receives the HARQ feedback at a PSFCH reception opportunity associated with PSSCH transmission on a first carrier, in which the first carrier is any carrier among the plurality of carriers associated with the unicast connection. The processor 901 is specifically configured to: for the unicast connection, determine whether to update a second variable associated with the first carrier based on whether the transmitting terminal receives the HARQ feedback at the PSFCH reception opportunity associated with the PSSCH transmission on the first carrier; and in a case that all second variables associated with all carriers associated with the unicast connection respectively are greater than or equal to a second threshold, determining to trigger the SL RLF for the unicast connection.

In a possible implementation, the processor 901 is further configured to: obtain the second threshold via second configuration information, in which the second threshold is configured according to terminal granularity.

In an implementation, the processor 901 is specifically configured to: for the unicast connection, determine that the second variable associated with the first carrier is incremented by 1 in a case that the transmitting terminal does not receive the HARQ feedback at the PSFCH reception opportunity associated with the PSSCH transmission on the first carrier.

In a possible implementation, the processor 901 is further configured to: for the unicast connection, determine that the second variable associated with the first carrier is reset as 0 in a case that the transmitting terminal receives the HARQ feedback at the PSFCH reception opportunity associated with the PSSCH transmission on the first carrier.

In a possible implementation, the processor 901 is further configured to: in a case of determining that the second variable corresponding to the first carrier is greater than or equal to the second threshold and an allocation mode of SL transmission resources of the transmitting terminal is a second allocation mode, trigger resource reselection and/or carrier reselection, in which the second allocation mode is a mode where the transmitting terminal autonomously selects the SL transmission resources. A second variable corresponding to a reselected carrier is less than the second threshold; or a second variable corresponding to a reselected carrier is less than or equal to a third threshold, in which the third threshold is less than the second threshold.

In a possible implementation, the processor 901 is further configured to: obtain the third threshold via third configuration information, in which the third threshold is configured according to terminal granularity.

In a possible implementation, the interface 902 is configured to: in a case that the second variable is greater than or equal to the second threshold, send first information to the network device, in which the first information indicates that the SL RLF based on HARQ feedback occurs on the carrier corresponding to the second variable. The "SL RLF based on HARQ feedback occurs on the carrier" described in the present disclosure means a state in which the second variable associated with/corresponding to the carrier reaches the maximum threshold. It may have other naming forms, such as "RLF on a carrier", etc., which is not specifically limited in the disclosure. The transmitting terminal is in an RRC connected state.

In a possible implementation, the interface 902 is specifically configured to: send the first information to the network device via SUI; send the first information to the network device via UAI; or send the first information to the network device via MAC CE.

In the case that the chip is used to implement the functions of the network device in the embodiments of the present disclosure,

The interface 902 is configured to send first configuration information to a transmitting terminal. The first configuration information includes a first threshold associated with a first variable, and the transmitting terminal maintains one first variable for each unicast connection, and the unicast connection is a unicast connection established between the transmitting terminal and a receiving terminal on an SL, and the transmitting terminal and the receiving terminal perform SL communication via a plurality of carriers, and the plurality of carriers are associated with the unicast connection, and the first variable is configured to count a number of consecutive DTXs of the unicast connection on the plurality of carriers. The first variable is used by the transmitting terminal to determine whether to trigger the SL RLF for the unicast connection.

In an implementation, the first threshold is configured according to terminal granularity.

In the case that the chip is used to implement the functions of the network device in the embodiments of the present disclosure,

The interface 902 is configured to send second configuration information to a transmitting terminal. The transmitting terminal and a receiving terminal establish a unicast connection on an SL, and the transmitting terminal and the receiving terminal perform SL communication via a plurality of carriers, and the plurality of carriers are associated with the unicast connection; the second configuration information includes a second threshold associated with a second variable, the transmitting terminal maintains one second variable for each carrier independently, and the second variable is configured to count a number of consecutive DTXs of the unicast connection on a carrier corresponding to the second variable. The second variable is used by the transmitting terminal to determine whether to trigger the SL RLF for the unicast connection. The second threshold is configured according to the terminal granularity.

In an implementation, the interface 902 is further configured to send third configuration information to the transmitting terminal. The third configuration information includes a third threshold, the third threshold is less than the second threshold, and the third threshold is used by the transmitting terminal to reselect the carrier. An allocation mode of SL transmission resources of the transmitting terminal is a second allocation mode, and the second allocation mode is a mode where the transmitting terminal autonomously selects the SL transmission resources.

In an implementation, the interface 902 is further configured to receive first information sent by the transmitting terminal. The first information is configured to indicate that the SL RLF based on HARQ feedback is occurred on the carrier associated with/corresponding to the second variable. The "SL RLF based on HARQ feedback occurs on the carrier" described in the present disclosure means a state in which the second variable associated with the carrier reaches the maximum threshold. It may have other naming forms, such as "RLF on a carrier", etc., which is not specifically limited in the disclosure.

In a possible implementation, the interface 902 is specifically configured to: receive the first information sent by the transmitting terminal via SUI; receive the first information sent by the transmitting terminal via UAI; or receive the first information sent by the transmitting terminal via MAC CE.

Optionally, the chip further includes a memory 903, which is used to store necessary computer programs and data.

Those skilled in the art may also understand that the various illustrative logical blocks and steps listed in the embodiments of the disclosure may be implemented by electronic hardware, computer software, or their combination. Whether such functionality is implemented in hardware or software depends on a specific application and overall system design requirements. Those skilled in the art may use various methods to implement the described functions for each specific application, but such implementation should not be understood as going beyond the protection scope of the embodiments of the disclosure.

The embodiments of the disclosure also provide a system for detecting SL RLF, which includes the communication apparatus in the above embodiment of FIG. 7 as a terminal (such as the transmitting terminal in the above method embodiments) and the communication apparatus in the above embodiment of FIG. 7 as a network device. Alternatively, the system includes the communication device in the above embodiment of FIG.8 as a terminal (such as the ATG terminal in the above method embodiments) and the communication device in the above embodiment of FIG. 8 as a network device.

The embodiments of the present disclosure further provides a communication system, including: a terminal and a network device. The terminal is configured to implement the method described in any of the above embodiments on the transmitting terminal side. The network device may be configured to implement the method described in any of the above embodiments on the network device side.

The disclosure also provides a readable storage medium on which instructions are stored, and when the instructions are executed by a computer, the functions of any one of the above method embodiments are implemented.

The disclosure also provides a computer program product, which implements the functions of any one of the above method embodiments when executed by a computer.

In the above embodiments, it may be implemented in whole or in part by software, hardware, firmware, or any combination. When implemented in software, it may be implemented in whole or in part in the form of a computer program product. The computer program product includes one or more computer programs. When the computer program is loaded and executed on a computer, the processes or functions described in the embodiments of the disclosure are generated in whole or in part. The computer may be a general-purpose computer, a special-purpose computer, a computer network, or other programmable device. The computer program may be stored in or transferred from one computer-readable storage medium to another. For example, the computer program may be transferred from a website, a computer, a server, or a data center to another website, another computer, another server or another data center through a wired means (such as a coaxial cable, an optical fiber, a digital subscriber line (DSL)) or a wireless means (such as infrared, wireless, microwave, etc.). The computer-readable storage medium may be any available medium that may be accessed by a computer or a data storage device such as a server, a data center, etc. that contains one or more available media integrated. The available media may be magnetic media (e.g., a floppy disk, a hard disk, a tape), optical media (e.g., a digital video disc (DVD)), or semiconductor media (e.g., a solid state disk (SSD)) etc.

Those skilled in the art may understand that the first, second, and other numerical numbers involved in the disclosure are only for convenience of description and are not used to limit the scope of the embodiments of the disclosure and also indicate the order.

The term "at least one" in the disclosure can also be described as one or more, and "a plurality of" may be two, three, four or more, which is not limited by the disclosure. In the embodiments of the disclosure, for a technical feature, the technical feature is distinguished by "first", "second", "third", "A", "B", "C" and "D", etc. The technical features described in "first", "second", "third", "A", "B", "C" and "D" are in no particular order or size sequence.

The corresponding relationships shown in each table in the disclosure may be configured or predefined. The values of the information in each table are only examples and may be configured as other values, which is not limited by the disclosure. When configuring the correspondence between information and each parameter, it is not necessarily required to configure all the correspondences shown in each table. For example, in the table in the disclosure, the corresponding relationships shown in some rows may not be configured. For another example, appropriate deformation adjustments may be made based on the above tables, such as splitting, merging, etc. The names of the parameters shown in the titles of the above tables may also be other names that may be understood by the communication device, and the values or expressions of the parameters may also be other values or expressions that may be understood by the communication device. When implementing the above tables, other data structures may also be used, such as arrays, queues, containers, stacks, linear lists, pointers, linked lists, trees, graphs, structures, classes, heaps, hash tables, etc.

Predefinition in the disclosure may be understood as definition, pre-definition, storage, pre-storage, pre-negotiation, pre-configuration, solidification, or pre-burning.

Those skilled in the art may be aware that the units and algorithm steps of each example described in conjunction with the embodiments disclosed herein may be implemented with electronic hardware, or a combination of computer software and electronic hardware. Whether these functions are executed in hardware or software depends on a specific application and design constraints of the technical solution. Those skilled in the art may implement the described functionality using different methods for each specific application, but such implementations should not be considered to go beyond the scope of the disclosure.

Those skilled in the art may clearly understand that for the convenience and simplicity of description, for the specific working processes of the systems, devices and units described above reference may be made to the corresponding processes in the foregoing method embodiments, which will not be repeated here.

The above are only specific embodiments of the disclosure, but the protection scope of the disclosure is not limited. Any person in the technical field may easily think of changes or substitutions within the technical scope disclosed in the disclosure, which should be covered by the protection scope of the disclosure. Therefore, the protection scope of the disclosure should be determined by the protection scope of the claims.

## Claims

1. A method for detecting sidelink (SL) radio link failure (RLF), performed by a transmitting terminal, the method comprising:
determining reception of hybrid automatic repeat request (HARQ) feedback on a physical sidelink feedback channel (PSFCH); and
determining whether to trigger the SL RLF for a unicast connection based on the reception of HARQ feedback on the PSFCH;
wherein the unicast connection is a unicast connection established between the transmitting terminal and a receiving terminal on an SL, the transmitting terminal and the receiving terminal perform SL communication via a plurality of carriers, and the plurality of carriers are associated with the unicast connection.

2. The method according to claim 1, wherein the transmitting terminal maintains one first variable for each unicast connection, and the first variable is configured to count a number of consecutive discontinuous transmissions (DTXs) of the unicast connection on the plurality of carriers.

3. The method according to claim 2, wherein
determining the reception of HARQ feedback on the PSFCH comprises:
for the unicast connection, determining whether the transmitting terminal receives the HARQ feedback at a PSFCH reception opportunity associated with physical sidelink shared channel (PSSCH) transmission on any carrier among the plurality of carriers; and
determining whether to trigger the SL RLF for the unicast connection based on the reception of HARQ feedback on the PSFCH comprises:
for the unicast connection, determining whether to update the first variable based on whether the transmitting terminal receives the HARQ feedback at the PSFCH reception opportunity associated with the PSSCH transmission on any carrier among the plurality of carriers; and
determining to trigger the SL RLF for the unicast connection in a case that the first variable is greater than or equal to a first threshold.

4. The method according to claim 3, wherein determining whether to update the first variable based on whether the transmitting terminal receives the HARQ feedback at the PSFCH reception opportunity associated with the PSSCH transmission on any carrier among the plurality of carriers comprises:
for the unicast connection, determining that the first variable is incremented by 1 in a case that the transmitting terminal does not receive the HARQ feedback on the PSFCH reception opportunity associated with the PSSCH transmission on any carrier among the plurality of carriers.

5. The method according to any one of claims 2 to 4, further comprising:
for the unicast connection, determining that the first variable is reset as 0 in a case that the transmitting terminal detects the HARQ feedback on a PSFCH reception opportunity associated with PSSCH transmission on any carrier among the plurality of carriers.

6. The method according to any one of claims 3 to 5, further comprising:
obtaining the first threshold via first configuration information, wherein the first threshold is configured according to terminal granularity.

7. The method according to claim 1, wherein the transmitting terminal maintains one second variable for each carrier independently, and the second variable is configured to count a number of consecutive discontinuous transmissions (DTXs) of the unicast connection on a carrier corresponding to the second variable.

8. The method according to claim 7, wherein
determining the reception of HARQ feedback on the PSFCH comprises:
for the unicast connection, determining whether the transmitting terminal receives the HARQ feedback at a PSFCH reception opportunity associated with physical sidelink shared channel (PSSCH) transmission on a first carrier, wherein the first carrier is any carrier among the plurality of carriers associated with the unicast connection;
determining whether to trigger the SL RLF for the unicast connection based on the reception of HARQ feedback on the PSFCH comprises:
for the unicast connection, determining whether to update a second variable associated with the first carrier based on whether the transmitting terminal receives the HARQ feedback at the PSFCH reception opportunity associated with the PSSCH transmission on the first carrier; and
in a case that all second variables associated with all carriers associated with the unicast connection respectively are greater than or equal to a second threshold, determining to trigger the SL RLF for the unicast connection.

9. The method according to claim 8, further comprising:
obtaining the second threshold via second configuration information, wherein the second threshold is configured according to terminal granularity.

10. The method according to claim 8, wherein determining whether to update the second variable associated with the first carrier based on whether the transmitting terminal receives the HARQ feedback at the PSFCH reception opportunity associated with the PSSCH transmission on the first carrier comprises:
for the unicast connection, determining that the second variable associated with the first carrier is incremented by 1 in a case that the transmitting terminal does not receive the HARQ feedback at the PSFCH reception opportunity associated with the PSSCH transmission on the first carrier.

11. The method according to any one of claims 8 to 10, further comprising:
for the unicast connection, determining that the second variable associated with the first carrier is reset as 0 in a case that the transmitting terminal receives the HARQ feedback at the PSFCH reception opportunity associated with the PSSCH transmission on the first carrier.

12. The method according to any one of claims 8 to 11, further comprising:
in a case of determining that the second variable corresponding to the first carrier is greater than or equal to the second threshold and an allocation mode of SL transmission resources of the transmitting terminal is a second allocation mode, triggering resource reselection and/or carrier reselection, wherein the second allocation mode is a mode where the transmitting terminal autonomously selects the SL transmission resources.

13. The method according to claim 12, wherein
a second variable corresponding to a reselected carrier is less than the second threshold; or
a second variable corresponding to a reselected carrier is less than or equal to a third threshold, wherein the third threshold is less than the second threshold.

14. The method according to claim 13, further comprising:
obtaining the third threshold via third configuration information, wherein the third threshold is configured according to terminal granularity.

15. The method according to any one of claims 8 to 14, further comprising:
in a case that the second variable is greater than or equal to the second threshold, sending first information to a network device, wherein the first information indicates that the second variable corresponding to the carrier is greater than or equal to the second threshold; and the transmitting terminal is in a radio resource control (RRC) connected state.

16. The method according to claim 15, wherein sending the first information to the network device comprises any one of:
sending the first information to the network device via sidelink user equipment information (SUI);
sending the first information to the network device via user equipment assistance information (UAI); or
sending the first information to the network device via a media access control (MAC) control element (CE).

17. A method for detecting sidelink (SL) radio link failure (RLF), performed by a network device, the method comprising:
sending first configuration information to a transmitting terminal, wherein the first configuration information comprises a first threshold associated with a first variable, the transmitting terminal maintains one first variable for each unicast connection, the unicast connection is a unicast connection established between the transmitting terminal and a receiving terminal on an SL, the transmitting terminal and the receiving terminal perform SL communication via a plurality of carriers, the first variable is configured to count a number of consecutive discontinuous transmissions (DTX) of the unicast connection on the plurality of carriers, and the plurality of carriers are associated with the unicast connection; and
wherein the first variable is used by the transmitting terminal to determine whether to trigger the SL RLF for the unicast connection.

18. The method according to claim 17, wherein the first threshold is configured according to terminal granularity.

19. A method for detecting sidelink (SL) radio link failure (RLF), performed by a network device, the method comprising:
sending second configuration information to a transmitting terminal, wherein the transmitting terminal and a receiving terminal establish a unicast connection on an SL, the transmitting terminal and the receiving terminal perform SL communication via a plurality of carriers, and the plurality of carriers are associated with the unicast connection;
the second configuration information comprises a second threshold associated with a second variable, the transmitting terminal maintains one second variable for each carrier independently, the second variable is configured to count a number of consecutive discontinuous transmissions (DTXs) of the unicast connection on a carrier corresponding to the second variable, and the second variable is used by the transmitting terminal to determine whether to trigger the SL RLF for the unicast connection.

20. The method according to claim 19, wherein the second threshold is configured according to terminal granularity.

21. The method according to claim 19, further comprising:
sending third configuration information to the transmitting terminal, wherein the third configuration information comprises a third threshold, the third threshold is less than the second threshold, and the third threshold is used by the transmitting terminal to reselect the carrier; wherein an allocation mode of SL transmission resources of the transmitting terminal is a second allocation mode, and the second allocation mode is a mode where the transmitting terminal autonomously selects the SL transmission resources.

22. The method according to claim 19, further comprising:
receiving first information sent by the transmitting terminal, wherein the first information indicates that the second variable corresponding to the carrier is greater than or equal to the second threshold.

23. The method according to claim 22, wherein receiving the first information sent by the transmitting terminal comprises any one of:
receiving the first information sent by the transmitting terminal via sidelink user equipment information (SUI);
receiving the first information sent by the transmitting terminal via user equipment assistance information (UAI); or
receiving the first information sent by the transmitting terminal via a media access control (MAC) control element (CE).

24. An apparatus for detecting sidelink (SL) radio link failure (RLF), comprising:
a processing module, configured to determine reception of hybrid automatic repeat request (HARQ) feedback on a physical sidelink feedback channel (PSFCH);
wherein the processing module is further configured to determine whether to trigger the SL RLF for a unicast connection based on the reception of HARQ feedback on the PSFCH;
wherein the unicast connection is a unicast connection established between the transmitting terminal and a receiving terminal on an SL, the transmitting terminal and the receiving terminal perform SL communication via a plurality of carriers, and the plurality of carriers are associated with the unicast connection.

25. An apparatus for detecting sidelink (SL) radio link failure (RLF), comprising:
a transceiver module, configured to send first configuration information to a transmitting terminal, wherein the first configuration information comprises a first threshold associated with a first variable, the transmitting terminal maintains one first variable for each unicast connection, the unicast connection is a unicast connection established between the transmitting terminal and a receiving terminal on an SL, the transmitting terminal and the receiving terminal perform SL communication via a plurality of carriers, the plurality of carriers are associated with the unicast connection, and the first variable is configured to count a number of consecutive discontinuous transmissions (DTX) of the unicast connection on the plurality of carriers; and
wherein the first variable is used by the transmitting terminal to determine whether to trigger the SL RLF for the unicast connection.

26. An apparatus for detecting sidelink (SL) radio link failure (RLF), comprising:
a transceiver module, configured to send second configuration information to a transmitting terminal, wherein the transmitting terminal and a receiving terminal establish a unicast connection on an SL, the transmitting terminal and the receiving terminal perform SL communication via a plurality of carriers, and the plurality of carriers are associated with the unicast connection; and
the second configuration information comprises a second threshold associated with a second variable, the transmitting terminal maintains one second variable for each carrier independently, the second variable is configured to count a number of consecutive discontinuous transmissions (DTXs) of the unicast connection on a carrier corresponding to the second variable, and the second variable is used by the transmitting terminal to determine whether to trigger the SL RLF for the unicast connection.

27. A communication device comprising a processor and a memory storing a computer program which, when executed by the processor, causes the communication device to perform the method according to any one of claims 1 to 16.

28. A communication device comprising a processor and a memory storing a computer program which, when executed by the processor, causes the communication device to perform the method according to claim 17 or 18.

29. A communication device comprising a processor and a memory storing a computer program which, when executed by the processor, causes the communication device to perform the method according to any one of claims 19 to 23.

30. A communication system, comprising:
a terminal, configured to perform the method according to any one of claims 1 to 16; and
a network device configured to perform the method according to any one of claims 17 to 23.

31. A computer-readable storage medium storing instructions which, when executed, enable the method according to any one of claims 1 to 16 to be implemented.

32. A computer-readable storage medium storing instructions which, when executed, enable the method according to claim 17 or 18 to be implemented.

33. A computer-readable storage medium storing instructions which, when executed, enable the method according to any one of claims 19 to 23 to be implemented.
